# EUROPÄISCHE PATENTSCHRIFT

(11) **EP 2 985 579 B1**
(45) Veröffentlichungstag und Bekanntmachung des Hinweises auf die Patenterteilung: **27.11.2019**
(21) Anmeldenummer: 15172759.1
(22) Anmeldetag: 18.06.2015
(51) Int. Cl.: G01J 3/06, G01J 3/18, G01J 3/12, G01N 21/64, G01N 35/02, G01J 3/42, G01N 21/25, G01N 21/31

(54) **SPEKTROMETER MIT MONOCHROMATOR UND ORDER-SORTING-FILTER**
SPECTROMETER WITH MONOCHROMATOR AND ORDER SORTING FILTER
SPECTROMETRE DOTE D'UN MONOCHROMATEUR ET UN FILTRE DE TRI SEQUENTIEL

(30) Priorität: 11.07.2014 CH 10542014
(43) Veröffentlichungstag der Anmeldung: 17.02.2016
(73) Patentinhaber: Tecan Trading AG, 8708 Männedorf (CH)
(72) Erfinder: NIGGL, Lutz, 83329 Waging (DE); ERLBACHER, Andreas, 5082 Grödig (AT); MÜNCHOW, Frank, 83395 Freilassing (DE)
(74) Vertreter: OK pat AG

(56) Entgegenhaltungen:
- EP-A1- 0 015 607
- WO-A1-93/22636
- US-A- 3 711 708
- US-A1- 2009 168 182
- US-B1- 6 313 471

## Beschreibung

Die Erfindung betrifft ein Spektrometer mit Monochromator und Order-Sorting-Filter für die Absorptions-Spektrometrie an Proben in Mikroplatten-Wells sowie ein Raster-Verfahren zum Erfassen des Absorptions-Spektrums von Proben in Mikroplatten-Wells, bei dem ein mit einem Monochromator und mit einem derartigen Order-Sorting-Filter ausgerüstetes Spektrometer verwendet wird.

Spektrometer mit Monochromator sind seit längerer Zeit bekannt und werden beispielsweise zur Erzeugung von Beleuchtungslicht mit bestimmter Wellenlänge für die Untersuchung der Absorptionscharakteristik von klaren niedermolekularen Lösungen verwendet. Spektrometer werden auch zum Erfassen und Messen von Licht über einen weiten Wellenlängenbereich verwendet, der das nahe Infrarotlicht, das sichtbare Licht und das Ultraviolettlicht des elektromagnetischen Spektrums umfasst.

Aus dem Patent US 4,225,233 ist ein speziell schnelles Scanning- oder Raster-Spektrophotometer bekannt, das Beleuchtungslicht mit einer vorbestimmten Wellenlänge in Abhängigkeit von an ein Rasterelement abgegebenen Steuerspannungs-Signalen produziert. Ein im Gegensatz zu konventionellen Spektrometern in der Gitter-Bildebene des Spektrophotometers angeordnetes Rasterelement ist als kleiner Spiegel ausgebildet, der am Rotor eines Galvanometers befestigt ist. Die Winkelposition dieses Galvanometers wird über einen geschlossenen, elektronischen Regelkreis präzise gesteuert. Das vom Spiegel reflektierte Licht-Spektrum wird durch einen Schlitz gelenkt, wodurch Licht mit der vorbestimmten Wellenlänge in einem Bereich von 50 bis 300 nm oder gar von 50 bis 600 nm bereitgestellt wird. Der Wellenlängenbereich wird linear abgerastert. AIlerdings muss wegen der Limitierung durch den Antrieb des Galvanometers beim grösseren Wellenlängenbereich eine reduzierte Wellenlängenpräzision in Kauf genommen werden.

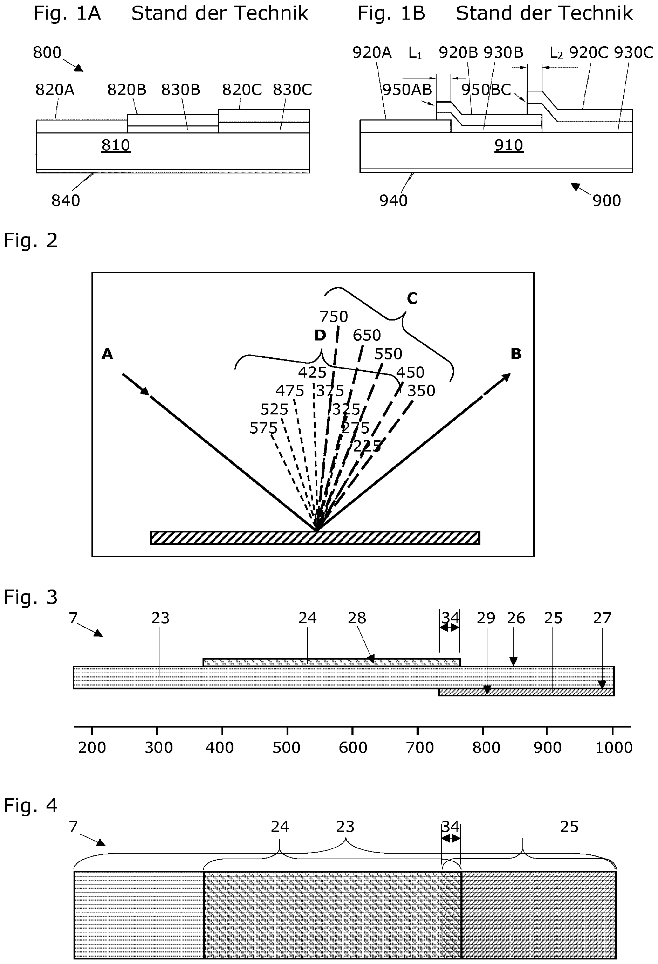

Anders als mit einem Spiegel zum Umlenken des durch einen Monochromator bereitgestellten Spektrums beim Erzeugen eines Beleuchtungsstrahls zum Untersuchen einer Probe wird im Patent US 7,924,422 B2 beim spektrometrischen Detektieren des von einem untersuchten Gegenstand reflektierten Lichts dem verwendeten Dispersionsgitter ein Order-Sorting-Filter (OSF) nachgeschaltet. Dieses Dokument offenbart ein Kalibrierverfahren für die optische Metrologie. Der gezeigte OSF umfasst drei Filterzonen, er kann aber auch weniger oder mehr Filterzonen aufweisen. Jede der beispielhaften drei Filterzonen wirkt als Langpass- oder Bandpass-Filter um zu verhindern, dass die direkt darunter angeordneten Pixel des Arraydetektors (z.B. eines CCD- oder CMOS- Sensors) Licht von Beugungsordnungen empfangen, die höher sind als die gemessenen Beugungsordnungen (typischerweise eine der ersten Ordnungen +/- 1). Die offenbarten OSF sind für einen Wellenlängenbereich verwendbar, der vom nahen Infrarotlicht (NIR) über das sichtbare Licht (VIS) und das Ultraviolettlicht (UV) bis zum tiefen Ultraviolettlicht (DUV) des elektromagnetischen Spektrums reicht. Aus diesem Patent US 7,924,422 B2 sind Order-Sorting-Filter mit drei Zonen bekannt, deren Transmissionsbereich durch Dünnschicht-Stapelfilter erzeugt werden, die alle auf einem gemeinsamen, optisch transparenten Substrat und zumindest teilweise auf Unterschichten angeordnet sind. Dabei ist in der Fig. 1A ein Order-Sorting-Filter mit aneinanderstossenden Dünnschicht-Stapelfiltern (vgl. Fig. 8 von US 7,924,422 B2) und in der Fig. 1B ein Order-Sorting-Filter mit einander teilweise überlappenden Dünnschicht-Stapelfiltern (vgl. Fig. 9 von US 7,924,422 B2) gezeigt.

Das Dokument US 3,711,708 offenbart einen Schnellscanner zum Erfassen von Infrarotspektren am Ausgang eines Gaschromatographen, das Dokument EP 0 015 607 A1 offenbart einen modifizierten Ebert-Monochromator für ein Spektrometer, und das Dokument WO 93/22636 A1 offenbart einen in einem separaten Gehäuse angeordneten Monochromator mit je einem feststehenden Eintritts- und Austrittsspalt, einem Beugungsgitter und mit einem vom Gitterantrieb kontinuierlich und winkelsynchron zum Gitter angetriebenen Kantenfilter.

Das Dokument US 6,313,471 B1 offenbart ein Gerät zum Bestimmen der Fluoreszenz, Lumineszenz oder Absorption einer Probe, welche sich in einer Küvette oder in einem Well einer Mikroplatte befindet. Das Gerät umfasst eine Breitband-Lichtquelle, einen in einem separaten Gehäuse angeordneten Monochromator und ein Filterrad mit einer Anzahl separierter Bandpass- und/oder Kanten-Filter zum Steuern der Wellenlänge des auf den Detektor treffenden Lichts. Das Anregungslicht und das Emissionslicht werden in je einer optischen Faser in die Nähe der Probe in einem Well bzw. in die Nähe des Detektors gebracht.

Das Dokument US2009/168182 A1 offenbart ferner einen Ordnungsfilter auf einem teilweise beschichteten Substrat, das auf der Rückseite eine Antireflexionsschicht aufweist.

Mikroplattenreader sind als optische Messsysteme zum Erfassen der Fluoreszenz, Lumineszenz und/oder Absorption von Proben in Wells einer Mikroplatte seit langem bekannt und z.B. in Form von Produkten des aktuellen Patentanmelders auf dem Markt erhältlich. Zum Beispiel umfassen die Mikroplattenreader der Infinite®-Familie Vorrichtungen (Monochromator, Filter) zum Auswählen bestimmter Wellenlängen bzw. Wellenlängenbereiche des Lichts zum Bestrahlen der Proben in den Mikroplatten-Wells. Auch das von den Proben kommende Licht kann mittels Filtern oder Monochromator in bevorzugte Wellenlängenbereiche unterteilt und entsprechenden Detektoren zugeführt werden.

Als Mikroplatte werden im Zusammenhang mit der vorliegenden Erfindung alle Multiwellplatten bezeichnet, die eine Vielzahl an Wells oder Behältern aufweisen, welche in einem Array angeordnet sind. Speziell bevorzugte Mikroplatten weisen zumindest annähernd die Masse und den Footprint einer Mikroplatte nach dem SBS Standard auf, wie dieser vom American National Standards Institute (AN-SI_SBS 1-2-3-4-2004) veröffentlicht wurde. Bekannt sind beispielsweise Mikroplatten, deren Wells mit einem Rundboden, Flachboden oder V-Boden ausgestattet sind. Dabei können die Wells als "normale Wells" oder auch als "Deep Wells" ausgebildet sein.

Auch kegelstumpf- oder pyramidenstumpfförmige Wells sind an sich bekannt. Allen Mikroplatten mit den unterschiedlichsten Wellformen ist gemeinsam, dass sie eine normierte Grundfläche, also einen normierten "Footprint" aufweisen, und dass der Achsabstand der jeweils in einem Array angeordneten Wells ebenfalls normiert ist. Dieser Achsabstand beträgt z.B. bei 24-Well (4 x 6) Platten 18 mm, bei 96-Well (8 x 12) Platten 9 mm, bei 384-Well (16 x 24) Platten 4.5 mm und bei 1536-Well (32 x 48) Platten 2.25 mm. Die Höhe einer Mikroplatte kann je nach Typ sehr stark variieren und beträgt typischerweise zwischen 10.4 mm (z.B. 1536 V-Boden Deep Well Platte) und 44 mm (z.B. 96 Well Masterblock® von Greiner).

Erstreckt sich der genutzte Wellenlängenbereich eines Spektrometers über mehr als eine Oktave, ist dem Licht der eingestellten gewünschten Wellenlänge zusätzlich ein gewisser Anteil an Licht der halben Wellenlänge beigemischt. Dieser Anteil entstammt der nächsthöheren Beugungsordnung des Gitters, das unerwünschte Licht ist geometrisch nicht trennbar vom erwünschten Licht (vgl. Fig. 2). Zum Zurückhalten dieser unerwünschten Anteile von den durch einen Monochromator erzeugten Wellenlängen oder Wellenlängenbereiche ist die spektrale Abtrennung durch das Anordnen von Langpass-Filtern (Order-Sorting-Filtern) im Lichtweg bekannt. Entsprechend der gewählten Wellenlänge muss ein entsprechender Filter verwendet werden. So ist beispielsweise ein Langpassfilter mit einer Kantenwellenlänge von 350 nm geeignet, um die gewünschten Monochromator-Wellenlängen im Bereich von etwa 360 nm bis 680 nm von unerwünschtem Licht höherer Ordnungen (kleiner als 340 nm) zu befreien. Wenn also ein konventionelles Spektrometer eine Rasterung bzw. einen Scan über einen weiten Wellenlängenbereich ausführen soll, so müssen mehrere Filterwechsel ausgeführt werden. Ein Scanbereich von beispielsweise 200 nm bis 1000 nm erstreckt sich über mehr als zwei Oktaven und benötigt deshalb drei verschiedene Langpassfilter, was zwei Filterwechsel zur Folge hat. Jedes Wechseln der Filter kostet Zeit, wobei auch jeweils die Bewegung des Monochromator-Gitters angehalten werden muss. Will man aber schnelle Scans mit Messungen über einen weiten Wellenlängenbereich von 200 nm bis 1000 nm ausführen, so sind derartige durch die Filterwechsel erzwungene Unterbrüche zeitraubend und nicht akzeptabel.

Es ist eine Aufgabe der vorliegenden Erfindung, ein Spektrometer für die Absorptions-Spektrometrie an Proben in Mikroplatten-Wells vorzuschlagen, das eine Kombination von Monochromator und Order-Sorting-Filter umfasst, und das einen kontinuierlichen Scan über einen Wellenlängenbereich von 200 nm bis 1000 nm ermöglicht, ohne dass das Beugungsgitter des Monochromators während des Scannens angehalten werden muss. Diese Aufgabe wird mit einem Spektrometer entsprechend den Merkmalen des unabhängigen Anspruchs 1 gelöst.

Es ist eine zusätzliche Aufgabe der vorliegenden Erfindung, ein Raster-Verfahren vorzuschlagen, bei dem ein Spektrometer mit einer Kombination von Monochromator und Order-Sorting-Filter bei der Absorptions-Spektrometrie an Proben in Mikroplatten-Wells während einem schnellen Scan über einen Wellenlängenbereich von 200 nm bis 1000 nm verwendet wird ohne das Beugungsgitter des Monochromators während dem Scannen anzuhalten. Diese Aufgabe wird mit einem Raster-Verfahren entsprechend den Merkmalen des unabhängigen Anspruchs 17 gelöst.

Weitere bevorzugte und erfinderische Merkmale ergeben sich aus den jeweils abhängigen Ansprüchen.

Vorteile des erfindungsgemässen Spektrometers, des erfindungsgemässen Order-Sorting-Filters, bzw. des erfindungsgemässen Raster-Verfahrens umfassen:
- Die Verwendung des kontinuierlich und synchron mit dem Beugungsgitter des Monochromators bewegbaren Order-Sorting-Filters ermöglicht das kontinuierliche Erfassen eines Absorptions-Spektrums über einen Wellenlängenbereich von beispielsweise 200 nm bis 1000 nm.
- Das Erfassen eines Absorptions-Spektrums über einen Wellenlängenbereich von 200 nm bis 1000 nm in Schritten von 1 nm benötigt weniger als fünf Sekunden.
- Die einfache Ausführung eines Order-Sorting-Filters zum Erfassen eines Absorptions-Spektrums über einen Wellenlängenbereich von 200 bis 1000 nm, bei dem nur zwei optische dünne Schichten unterschiedlicher Charakteristik in Bezug auf die spektrale Transmission wechselseitig auf ein Quarzsubstrat aufgebracht sind, ermöglicht eine kostengünstige Herstellung im Vergleich zu konventionellen, linear variablen Filtern oder lückenlos zementierten Filterkombinationen.
- Für Order-Sorting-Filter zum Erfassen eines Absorptions-Spektrums über einen noch grösseren Wellenlängenbereich können vier oder mehr Zonen verwendet werden, wobei aneinanderstossende Zonen nach dem gleichen Prinzip wechselweise auf Vorder- und Rückseite des Substrates aufzubringen sind.
- Die teilweise räumliche Überlappung der beiden optischen dünnen Schichten reduziert die Anforderungen an die Präzision des Antriebs für die Bewegung des Order-Sorting-Filters im Vergleich zu einer konventionellen lückenlos zementierten Filterkombination.
- Der grosse Abstand der beiden Dünnschichten auf gegenüberliegenden Seiten des Substrates (etwa 1 mm Dicke) verhindert Interferenz- und Beugungseffekte im Überlappbereich, wie sie bei einem Order-Sorting-Filter mit auf einer Substratseite im Überlappbereich übereinander liegenden Dünnschichten auftreten (vgl. US 7,924,422 B2).

Ein beispielhafter erfindungsgemässer Order-Sorting-Filter bzw. ein beispielhaftes erfindungsgemässes Spektrometer werden anhand von schematischen Skizzen gezeigt. Diese Skizzen sollen ausgewählte Ausführungsformen des Erfindungsgegenstandes dokumentieren, aber den Umfang der vorliegenden Erfindung nicht einschränken. Dabei zeigt:
- Fig. 1A: einen aus dem Stand der Technik bekannten Order-Sorting-Filter mit drei Zonen, deren Transmissionsbereich durch aneinanderstossende Dünnschicht-Stapelfilter erzeugt werden, die alle auf einem gemeinsamen, optisch transparenten Substrat und zumindest teilweise auf Unterschichten angeordnet sind;
- Fig. 1B: einen Order-Sorting-Filter gem. Fig. 1A mit einander teilweise überlappenden Dünnschicht-Stapelfiltern;
- Fig. 2: eine schematisierte Darstellung von im Stand der Technik bekannten Beugungs-Ordnungen des gebeugten Lichts, das durch Dispersion des einfallenden Lichts an einem Beugungsgitter eines Monochromators aufgespalten wurde;
- Fig. 3: einen schematischen Längsschnitt durch einen erfindungsgemässen, im Wesentlichen rechteckigen Order-Sorting-Filter mit drei Zonen und wechselseitig aufgebrachten, rechteckig ausgebildeten Langpassfiltern;
- Fig. 4: eine Draufsicht auf einen gemäss Fig. 3 ausgebildeten Order-Sorting-Filter;
- Fig. 5: einen schematischen Vertikalschnitt durch ein erfindungsgemässes Spektrometer mit einer Kombination von Monochromator und Order-Sorting-Filter für die Absorptions-Spektrometrie an Proben in Mikroplatten-Wells;
- Fig. 6A: eine Draufsicht auf einen als rotierbare Filterscheibe erfindungsgemäss ausgebildeten Order-Sorting-Filter mit wechselseitig aufgebrachten, sektorförmigen Langpassfiltern;
- Fig. 6B: eine 3D-Darstellung eines als rotierbarer Filterzylinder erfindungsgemäss ausgebildeten Order-Sorting-Filters mit wechselseitig aufgebrachten, als Teil-Mantelflächen ausgebildeten Langpassfiltern.
- Fig. 7A: ein Diagramm, in welchen die Transmission der ersten und zweiten optischen Dünnschicht und des Überlappungsbereichs in Abhängigkeit der Wellenlänge und der Position der verwendeten Lichtquelle dargestellt ist, wobei das Messergebnis an einem erfindungsgemässen Order-Sorting-Filter mit wechselseitig aufgebrachten Langpassfiltern dargestellt ist; und
- Fig. 7B: ein Diagramm gem. Fig. 7A, wobei jedoch das Messergebnis an einem Order-Sorting-Filter mit gemäss dem Stand der Technik einseitig aufgebrachten Langpassfiltern dargestellt ist.

Beispiele eines erfindungsgemässen Order-Sorting-Filters und dessen Verwendung in einem Spektrometer bzw. bei der Durchführung eines erfindungsgemässen Verfahrens werden nun näher erläutert. Dabei wird insbesondere auf die Figuren 3 bis 7A Bezug genommen, weil aus dem Stand der Technik bekannte Fakten bereits anhand der Figuren 1A, 1B und 2 beschrieben wurden.

Gleiche Bezugszeichen in den Figuren bezeichnen gleiche oder zumindest ähnliche Merkmale, auch wenn diese nicht in jedem Fall ausführlich beschrieben sind.

Fig. 1A zeigt einen aus dem Stand der Technik bekannten Order-Sorting-Filter 800 mit drei Zonen deren Transmissionsbereich durch aneinanderstossende Dünnschicht-Stapelfilter erzeugt werden (vgl. Fig. 8 von US 7,924,422 B2).

Der Order-Sorting-Filter 800 weist ein für alle Zonen gemeinsames Substrat 810 mit einer darunter angeordneten Schicht 840 und jeweils pro Zone und über dem Substrat 810 angeordnete Dünnschicht-Stapelfilter auf. In der ersten Zone umfasst der Dünnschicht-Stapelfilter lediglich einen Dünnschichtfilter 820A, welcher direkt auf dem Substrat 810 angeordnet ist. In der zweiten Zone umfasst der Dünnschicht-Stapelfilter einen Dünnschichtfilter 820B und eine Unterschicht 830B, welche zwischen dem Dünnschichtfilter 820B und dem Substrat 810 angeordnet ist. Analog umfasst der Dünnschicht-Stapelfilter in der dritten Zone einen Dünnschichtfilter 820C und eine Unterschicht 830C, welche ebenfalls zwischen dem Dünnschichtfilter 820C und dem Substrat 810 angeordnet ist.

Fig. 1B zeigt einen aus dem Stand der Technik bekannten Order-Sorting-Filter 900 mit drei Zonen deren Transmissionsbereich durch einander teilweise überlappende Dünnschicht-Stapelfilter erzeugt werden (vgl. Fig. 9 von US 7,924,422 B2). Analog zu Fig. 8 umfasst der Order-Sorting-Filter 900 ein Substrat 910 mit einer darunter angeordneten Schicht 940 und pro Zone jeweils einen Dünnschicht-Stapelfilter, die ihrerseits einen Dünnschichtfilter 920A, resp. einen Dünnschichtfilter 920B mit einer Unterschicht 930B beziehungsweise einen Dünnschichtfilter 920C mit einer Unterschicht 930C umfassen.

Der Dünnschichtfilter 920A liegt direkt auf dem Substrat 910. Der Dünnschichtfilter 920B liegt hauptsächlich auf der Unterschicht 930B, in einen Überlappungsbereich 950AB mit einer Breite L1 jedoch überlappend über dem Dünnschichtfilter 920A der ersten Zone, sodass sich im Überlappungsbereich 950AB die folgende Schichtreihenfolge von unten nach oben ergibt: Substrat 910, Dünnschichtfilter 920A, Unterschicht 930B und Dünnschichtfilter 920B. In ähnlicher Weise liegt der Dünnschichtfilter 920C hauptsächlich über der Unterschicht 930C, in einen Überlappungsbereich 950BC mit Breite L2 jedoch überlappend über dem Dünnschichtfilter 920B der zweiten Zone, sodass sich im Überlappungsbereich 950BC die folgende Schichtreihenfolge von unten nach oben ergibt: Substrat 910, Unterschicht 930B, Dünnschichtfilter 920B, Unterschicht 930C und Dünnschichtfilter 920C.

Fig. 2 zeigt eine aus dem Stand der Technik bekannte schematisierte Darstellung von Beugungs-Ordnungen eines einfallenden Lichts A, welches durch Beugung an einem Beugungsgitter aufgespalten wird. Durch das Beugungsgitter (dargestellt als schraffierter Balken) wird das einfallende Licht A auf einen ersten auslaufenden Anteil B (durchgezogene Linie), einen zweiten auslaufenden Anteil C (grob gestrichelte Linien) und einen dritten auslaufenden Anteil D (fein gestrichelte Linien) aufgeteilt, wobei die verschiedenen Lichtstrahlen mit einer dem Beugungswinkel entsprechenden Wellenlänge bezeichnet sind (die Zahlenangabe entspricht der Wellenlänge in nm). Der erste Anteil B wird als 0. Beugungsordnung (zero order) bezeichnet und umfasst alle Wellenlängen des einfallenden Lichts A. Der zweite Anteil C wird als 1. Beugungsordnung (first order) bezeichnet und umfasst Lichtstrahlen mit den Wellenlängen 350 nm, 450 nm, 550 nm, 650 nm und 750 nm. Der dritte Anteil D wird als 2. Beugungsordnung (second order) bezeichnet und umfasst Lichtstrahlen mit den Wellenlängen 225 nm, 275 nm, 325 nm, 375 nm, 425 nm, 475 nm, 525nm und 575 nm. Für den Fachmann ist dabei klar, dass jeweils nicht nur diese besonderen Wellenlängen, sondern ein Kontinuum von Wellenlängen enthalten ist, die geometrisch getrennt sind. Deshalb erreicht man durch Anwendung eines Spaltes die Wellenlängenselektion. Bei einem Spektrometer ist der Anteil C erwünscht, der Anteil D jedoch unerwünscht.

Fig. 3 zeigt einen schematischen Längsschnitt durch einen erfindungsgemässen, im Wesentlichen rechteck-förmigen Order-Sorting-Filter 7, für den auch die Abkürzung OSF verwendet wird. Der Order-Sorting-Filter 7 umfasst ein Substrat 23 mit einer erste Oberfläche 26 und einer der ersten Oberfläche 26 gegenüberliegenden zweiten Oberfläche 27. Auf den Oberflächen 26 und 27 sind wechselseitig rechteck-förmige optische Dünnschichten angeordnet, nämlich eine erste optische Dünnschicht 24 auf der ersten Oberfläche 26 und eine zweite optische Dünnschicht 25 auf der zweiten Oberfläche 27. Die optischen Dünnschichten 24 und 25 sind jeweils beabstandet von einem Randbereich des Substrats 23 angeordnet, sodass ein Teilbereich des Substrats 23 unbedeckt ist. Ferner sind optischen Dünnschichten 24 und 25 entlang den Oberflächen 26 und 27 zueinander versetzt, jedoch teilweise einander gegenüberliegend angeordnet. Die optischen Dünnschichten sind derart ausgerichtet, dass die Kanten der optischen Dünnschichten 24 und 25 zumindest teilweise, insbesondere grösstenteils, zu den Kanten des Substrats 23 fluchten.

Der Begriff "optische Dünnschicht" bezeichnet eine Schicht, welche typischerweise aus einer Serie abwechselnder nanometer-dünnen Schichten aus zwei oder mehr unterschiedlichen Materialien besteht, beispielsweise aus wechselweise angeordneten TiO₂ und SiO₂-Schichten. Diese Schichten erzielen zusammen die optische Filterwirkung.

Der freie Randbereich des Substrats 23, d.h. der weder durch die erste optische Dünnschicht 24 noch durch zweite optische Dünnschicht 25 bedeckte erste Teilbereich, bildet eine erste Zone des Order-Sorting-Filters 7 und wirkt als Langpassfilter, beispielsweise mit einer Langpass-Kanten-Wellenlänge in einem Bereich von ca. 160 nm bis ca. 190 nm. Beispielsweise ist das Substrat 23 aus einem für sichtbares Licht transparenten Material wie Glas oder Quarz hergestellt.

Bei einem zweiten Teilbereich des Substrats 23 deckt die erste optische Dünnschicht 24 das Substrat 23 einseitig ab, d.h. die erste optische Dünnschicht 24 ist auf der ersten Oberfläche 26 des Substrats 23 angeordnet und die zweite Oberfläche 27 des Substrats 23 ist unbedeckt. Dieser zweite Teilbereich bildet eine zweite Zone des Order-Sorting-Filters 7, in diesem Ausführungsbeispiel einen ersten Langpassfilter 28, der beispielsweise eine Langpass-Kanten-Wellenlänge in einem Bereich von ca. 300 bis ca. 400 nm, insbesondere bei ca. 312 nm oder ca. 375 nm, aufweist.

Bei einem dritten Teilbereich des Substrats 23 ist das Substrat 23 einseitig durch die zweite optische Dünnschicht 25 abgedeckt, d.h. die zweite optische Dünnschicht 25 ist auf der zweiten Oberfläche 27 des Substrats 23 angeordnet und die erste Oberfläche 26 des Substrats 23 ist unbedeckt. Dieser dritte Teilbereich bildet somit eine dritte Zone des Order-Sorting-Filters 7, in diesem Ausführungsbeispiel einen zweiten Langpassfilter 29, der beispielsweise eine Langpass-Kanten-Wellenlänge in einem Bereich von ca. 400 bis ca. 800 nm, insbesondere ca. 515 nm oder ca. 740 nm, aufweist.

Zwischen der ersten und der zweiten Zone des Order-Sorting-Filters 7 liegt ein Übergangsbereich 34, welcher auch als Überlappungsbereich bezeichnet wird, und welcher durch die beidseitige Abdeckung mittels der beiden gegenüberliegenden optischen Dünnschichten 24 und 25 gebildet wird, d.h. durch die erste optische Dünnschicht 24 auf der ersten Oberfläche 26 und die zweite optische Dünnschicht 25 auf der zweiten Oberfläche 27. In einem Beispiel ist die Fläche des Übergangsbereichs 34 kleiner als 5 % der Fläche des Substrats 23, insbesondere kleiner als 2 %.

In einem weiteren Beispiel ist die Langpass-Kanten-Wellenlänge der ersten optischen Dünnschicht 24 um einen Faktor zwischen 1.5 und 2.5, insbesondere um 1.9, grösser als die Langpass-Kanten-Wellenlänge des Substrats 23 und/oder die Langpass-Kanten-Wellenlänge der zweiten optischen Dünnschicht 25 um einen Faktor zwischen 1.5 und 2.5, insbesondere um 1.9, grösser ist als die Langpass-Kanten-Wellenlänge der ersten optischen Dünnschicht 24.

Als Substratmaterialien mit ihren entsprechenden Kantenlagen oder als Glas im Sinne der vorliegenden Erfindung werden beispielsweise Saphir-Glas, MgF₂-Glas, Quarz-Glas, UV-Glas und Float-Glas verstanden, wie diese z.B. aus der Internet Homepage http://www.newport.com/Optical-Materials/144943/1033/content.aspx bekannt sind.

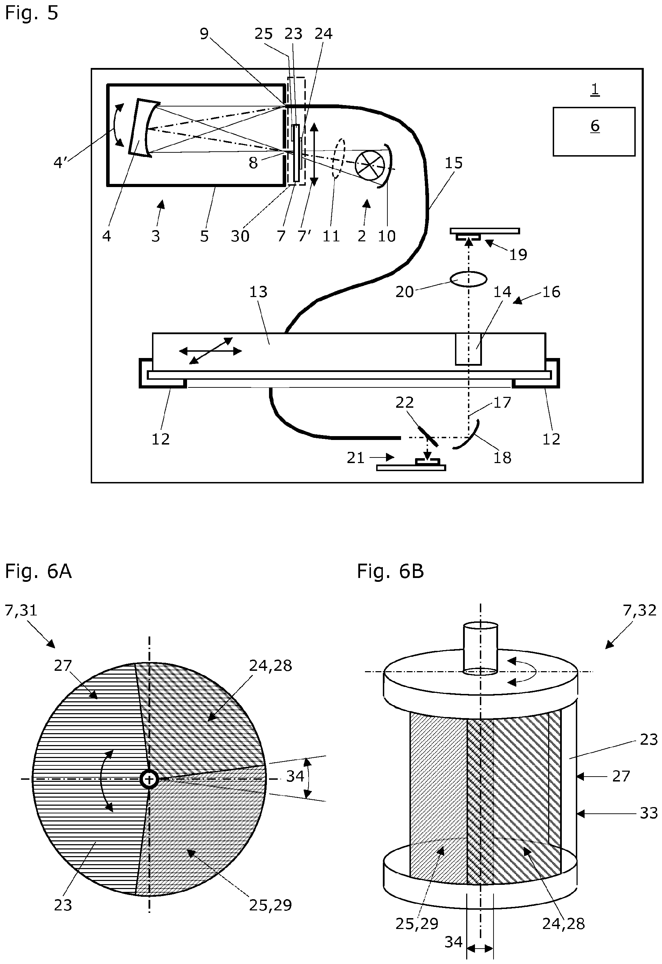

Ein beispielhafter Order-Sorting-Filter 7 für einen Filterschlitten 30 (vgl. Fig. 5) weist folgende Masse bzw. Eigenschaften auf:

| | |
|---|---|
| Substrat: | Quarzglas, Dicke 1 mm, Länge 40 mm, Breite 7 mm; |
| 1. Langpass-Filter 28: | Länge 12 mm, Breite 7 mm; |
| 2. Langpass-Filter 29: | Länge 6 mm, Breite 7 mm; |
| Räumliche Überlappung: | der beiden Langpass-Filter 28,29 um höchstens 1 mm, vorzugsweise höchstens um 0.5 mm. |

In einem Anwendungsbeispiel wird das erfindungsgemässe Order-Sorting-Filter 7 in einem Spektrometer verwendet, insbesondere in einem Spektrometer gemäss Fig. 5, und/oder bei einem Raster-Verfahren verwendet, mit welchem Absorptions-Spektren von Proben erfasst werden, die sich in Wells 14 von Mikroplatten 13 befinden.

Fig. 4 zeigt eine Draufsicht auf einen Order-Sorting-Filter 7 gemäss Fig. 3. Die rechteckige Form des Order-Sorting-Filters 7 ist besonders geeignet für eine lineare oder quasi-lineare Bewegung des Order-Sorting-Filters 7 in einem Spektrometer und/oder Monochromator.

Fig. 5 zeigt einen schematischen Vertikalschnitt durch ein erfindungsgemässes Spektrometer 1 zur Absorptions-Spektrometrie an Proben in Mikroplatten-Wells. In diesem Ausführungsbeispiel umfasst das Spektrometer 1 eine Lichtquelle 2, einen Monochromator 3 mit einem Order-Sorting-Filter 7, eine Mikroplatten-Aufnahme 12 mit einer Mikroplatte 13, einen Lichtleiter 15, eine Durchstrahlungsoptik 16 mit einer Durchstrahlungsachse 17 sowie eine Steuerung 6. Die Lichtquelle 2, beispielsweise in Form einer Blitzlampe, umfasst einen Kondensor-Spiegel 10 und eine Kondensor-Linse 11, sodass das Licht der Lichtquelle 2 zumindest teilweise sowohl direkt als auch via den Kondensor-Spiegel 10 zur Kondensor-Linse 11 und von dieser Kondensor-Linse 11 zum Monochromator 3 weitergeleitet werden kann.

Der Monochromator 3 ist einerseits mit der Lichtquelle 2 wirkverbunden, sodass zumindest ein Teil des von der Lichtquelle 2 erzeugten Lichts dem Monochromator 3 zugeführt werden kann, und andererseits über den Lichtleiter 15 mit der Durchstrahlungsoptik 16 wirkverbunden, sodass zumindest ein Teil des austretenden Lichts des Monochromators 3 an die Durchstrahlungsoptik 16 weitergeleitet werden kann. Der Monochromator 3 umfasst den Order-Sorting-Filter 7, ein Beugungsgitter 4 mit einem Beugungsgitter-Antrieb 4' und ein Monochromator-Gehäuse 5 mit einem Eintrittsspalt 8 und einem Austrittsspalt 9. Der Order-Sorting-Filter 7 ist auf einem Filterschlitten 30 (gestrichelt gezeichnet) angeordnet, sodass der Order-Sorting-Filter 7 bewegbar ist und mittels eines Order-Sorting-Filter-Antriebs 7' gesteuert verschoben werden kann (dargestellt durch einen Doppelpfeil). Das Beugungsgitter 4 ist drehbar um eine horizontale Achse gelagert und mit einem Beugungsgitter-Antrieb 4' wirkverbunden, sodass das Beugungsgitter 4 um die horizontale Achse gesteuert geschwenkt werden kann (dargestellt durch einen Doppelpfeil).

Der Order-Sorting-Filter 7 umfasst ein Substrat 23 mit einer ersten Oberfläche 26 und einer zweiten Oberfläche 27 sowie eine erste optische Dünnschicht 24 und eine zweite optische Dünnschicht 25. In diesem Beispiel wird ein Order-Sorting-Filter 7 gemäss Fig. 3 verwendet, sodass die optischen Dünnschichten 24 und 25 wechselseitig bezüglich des Substrats 23 und gegeneinander versetzt, in einem Übergangsbereich 34 jedoch teilweise gegenüberliegend angeordnet sind. Dabei bildet das unbedeckte Substrat 23 die erste Zone, die erste optische Dünnschicht 24 die als erster Langpass-Filter 28 wirkende zweite Zone und die zweite optische Dünnschicht 25 die als zweiter Langpass-Filter 29 wirkende dritte Zone.

In einem anderen Beispiel wird ein aus dem Stand der Technik bekanntes Order-Sorting-Filter verwendet, d.h. ein Order-Sorting-Filter mit einseitig auf das Substrat aufgebrachten optischen Dünnschichten, beispielsweise ein konventioneller Order-Sorting-Filter mit einer in Fig. 1A oder 1B gezeigten Filterkombination.

Im vorliegenden Ausführungsbeispiel ist der Order-Sorting-Filter 7 ausserhalb des Monochromator-Gehäuses 5 und in Wirkverbindung zum Eintrittsspalt 8 des Monochromators 3 angeordnet, sodass das aus dem Order-Sorting-Filter 7 austretende Licht durch den Eintrittsspalt 8 an das Beugungsgitter 4 des Monochromators 3 weitergeleitet wird und somit der Order-Sorting-Filter 7 dem Beugungsgitter 4 vorgeschaltet ist. Dabei beträgt der Strahldurchmesser des Lichts beim Durchtritt durch den Order-Sorting-Filter 7 etwa 4 mm. Der Order-Sorting-Filter 7 kann aber auch beim Austrittsspalt 9 des Monochromators 3 angeordnet sein, sodass dann der Order-Sorting-Filter 7 dem Monochromator 3 nachgeschaltet ist.

Der Order-Sorting-Filter Antrieb 4', beispielsweise ein Schrittmotor, und der Beugungsgitter-Antrieb 4', beispielsweise ebenfalls ein Schrittmotor, sind mit der Steuerung 6 wirkverbunden, sodass mit der Steuerung 6 sowohl die Bewegung des Beugungsgitters 4 als auch die Bewegung des Order-Sorting-Filters 7 gesteuert werden kann. Erfindungsgemäss werden beim Betrieb des Spektrometers 1 - wie nachfolgend detailliert beschrieben - die beiden Antriebe 4' und 7' synchronisiert gesteuert. Die Durchstrahlungsoptik 16 umfasst einen Strahlteiler 22, einen elliptischen Umlenkspiegel 18, einen Mess-Detektor 19 mit einer vorgeschalteten Sammellinse 20 und einen Referenzierungs-Detektor 21.

Die Mikroplatten-Aufnahme 12 ist zur Aufnahme der Mikroplatte 13 ausgebildet, wobei beispielsweise die Mikroplatte 13 ein Format nach dem ANSI-Standard mit einer vorgegebenen Anzahl von Wells 14 aufweist. Dabei sind die Wells 14, typischerweise in grosser Anzahl (z.B. 96) von gleichen Einheiten, als nebeneinanderliegende Sackbohrungen in der Mikroplatten 13 angeordnet (schematisch dargestellt als ein einzelnes Well 14).

Das Gehäuse 5 umschliesst den Monochromator 3 vorzugsweise praktisch licht- und staubdicht und ist im hier als Mikroplattenreader ausgebildeten Spektrometer 1 untergebracht.

In diesem Beispiel ist die Messanordnung 19 auf der Durchstrahlungsachse 17 der Durchstrahlungsoptik 16 und oberhalb der Mikroplatte 13 und die Referenzanordnung 21 auf der Durchstrahlungsachse 17 und unterhalb der Mikroplatte 13 angeordnet. Dabei ist die Durchstrahlungsachse 17 im Wesentlichen vertikal ausgerichtet und durchstösst im Bereich des Wells 14 die Mikroplatte 13 von der Unterseite der Mikroplatten-Aufnahme 12 zur Oberseite der Mikroplatte 13.

Beim Betrieb des Spektrometers 1 wird das Licht der Lichtquelle 2 (Blitzlampe) sowohl direkt als auch via Reflexion am Kondensor-Spiegel 10 der Kondensor-Linse 11 zugeführt und von der Kondensor-Linse 11 via dem Order-Sorting-Filter 7 zum Eintrittsspalt 8 des Monochromators 3 geleitet. Dabei wird das Licht gemäss dem Ort des Durchtritts durch den Order-Sorting-Filter 7 gefiltert, indem das Licht gemäss der jeweils durchquerten Zone oder des Übergangsbereichs 34 ein entsprechender kurzwelliger Anteil des Lichts entfernt wird. Vom Eintrittsspalt 8 wird das gefilterte Licht zum Beugungsgitter 4 des Monochromators 3 geleitet und dort durch das Beugungsgitter 4 gebeugt. Ein durch die Position des Beugungsgitters 4 ausgewählter Anteil des gebeugten Lichts wird dann als Licht mit definierter Wellenlänge an den Austrittsspalt 9 des Monochromators 3 geleitet.

Das durch den Austrittsspalt 9 tretende Licht wird über den Lichtleiter 15 an die Durchstrahlungsoptik 16 geleitet und dem Strahlteiler 22 der Durchstrahlungsoptik 16 zugeführt. Der Strahlteiler 22 lenkt einerseits einen Anteil des einfallenden Lichts auf den Referenzierungs-Detektor 21 ab und leitet andererseits einen weiteren Anteil des ankommenden Lichts an den elliptischen Umlenkspiegel 18 weiter. Der elliptische Umlenkspiegel 18 lenkt wiederum das vom Strahlteiler 22 empfangene Licht in Richtung der Durchstrahlungsachse 17 der Durchstrahlungsoptik 16, sodass dieses Licht sowohl die Mikroplatte 13 als auch das Well 14 und die darin befindliche Probe durchdringt. Dabei beträgt der Strahldurchmesser des Lichts am Ort der Probe etwa 0,7 mm. Das vom Well 14 kommende Licht wird mittels der Sammellinse 20 fokussiert und dem Mess-Detektor 19 zugeführt.

Der Mess-Detektor 19 detektiert das eintreffende Licht und übermittelt ein entsprechendes elektrisches Signal an eine Auswertevorrichtung (nicht gezeigt). Ebenso detektiert der Referenzierungs-Detektor 21 das beim Referenzierungs-Detektor 21 einfallende Licht und übermittelt ein entsprechendes elektrisches Signal an die Auswertevorrichtung.

Die Auswertevorrichtung, z. B. Elektronikschaltung und/oder Computer, wertet die empfangenen elektrischen Signale des Mess-Detektors 19 und des Referenzierungs-Detektors 21 aus und erstellt ein entsprechendes Absorptions-Spektrum der im Wells 14 angeordneten Probe. Dabei wird das Signal des Mess-Detektors 19 anhand des entsprechenden, synchron erfassten Signals des Referenzierungs-Detektors 21 normiert.

Erfindungsgemäss werden beim Betrieb des Spektrometers 1 der Order-Sorting-Filter 7 und das Beugungsgitter 4 des Monochromators 3 durch die Steuerung 6 synchron und kontinuierlich miteinander bewegt. Durch diese Synchronisation wird erreicht, dass in jeder der jeweiligen Winkelstellungen des Beugungsgitters 4 eine entsprechend zugeordnete Zone des Order-Sorting-Filters 7 eingestellt wird, sodass dadurch das Licht des Monochromators 3 von unerwünschten Beugungsordnungen befreit wird.

Die erfindungsgemässe Synchronisation ist besonders effizient, da eine kontinuierliche, d.h. unterbrechungsfreie, synchronisierte Bewegung des Beugungsgitters 4 und des Order-Sorting-Filters 7 erfolgt. So wird bei erster Beugungsordnung ein Durchlaufen der Licht-Wellenlängen (Scan) über ein Spektrum von ca. 200 nm bis ca. 1000 nm in 1 nm Schritten in weniger als 5 Sekunden erreicht.

In diesem Beispiel erfolgt die Bewegung des Order-Sorting-Filters 7 und des Beugungsgitters 4 gleichförmig, d.h. mit gleichbleibender Geschwindigkeit. In einem anderen Beispiel wird die Bewegung ungleichförmig durchgeführt, beispielsweise mit einer höheren Geschwindigkeit beim Durchlaufen des Übergangsbereichs 34 als beim Durchlaufen der anderen Bereiche (Zonen) des Order-Sorting-Filters 7. In einem weiteren Beispiel wird der Langpass-Kanten-Wellenlänge des Order-Sorting-Filters 7 eine Wellenlänge des Beugungsgitters 4 zugeordnet, welche um einen vorgegeben Wert (Offset) versetzt ist, beispielsweise um mindestens 10 nm, insbesondere um mindestens 20 nm. Beispielsweise ist einer ersten Langpass-Kanten-Wellenlänge von 312 nm eine Beugungsgitter-Wellenlänge von 350 nm und/oder einer zweiten Langpass-Kanten-Wellenlänge von 515 nm eine Beugungsgitter-Wellenlänge von 550 nm zugeordnet.

Fig. 6A zeigt eine Draufsicht auf einen erfindungsgemässen Order-Sorting-Filter 7, der als rotierbare Filterscheibe 31 ausgebildet ist. Die Filterscheibe 31 umfasst ein kreisrundes Substrat 23 mit einer ersten Oberfläche und einer der ersten Oberfläche gegenüberliegenden zweiten Oberfläche 27. Auf diesen Oberflächen sind, ähnlich dem rechteckförmigen Order-Sorting-Filter 7 gemäss Fig. 3, wechselseitig sektorförmige optische Dünnschichten angeordnet, nämlich eine erste optische Dünnschicht 24 auf der ersten Oberfläche und eine zweite optische Dünnschicht 25 auf der zweiten Oberfläche 27. Die optischen Dünnschichten 24 und 25 sind entlang den Oberflächen winklig zueinander versetzt und teilweise einander bezüglich dem Substrat 23 gegenüberliegend angeordnet und lassen einen Sektor des Substrats 23 unbedeckt.

Dementsprechend wird eine erste Zone der Filterscheibe 31 durch das unbedeckte Substrat 23 gebildet, eine zweite Zone durch die einseitige Abdeckung mittels der ersten optischen Dünnschicht 24, eine dritte Zone durch die einseitige Abdeckung mittels der zweite optischen Dünnschicht 25 und ein Übergangsbereich 34 durch die beidseitige Abdeckung mittels der beiden optischen Dünnschichten 24 und 25. Dabei bildet die erste Zone einen ersten Langpassfilter 28 und die zweite Zone einen zweiten Langpassfilter 29.

Ein beispielhafter erfindungsgemässer Order-Sorting-Filter 7 für die Filterscheibe 31 weist folgende Masse bzw. Eigenschaften auf:

| | |
|---|---|
| Substrat: | Dicke 1 mm, Durchmesser 20 mm; |
| 1. Langpass-Filter 28: | Kreis-Sektor, Durchmesser 20 mm, Winkel 180°; |
| 2. Langpass-Filter 29: | Kreis-Sektor, Durchmesser 20 mm, Winkel 90°; |
| Räumliche Überlappung: | der beiden Langpass-Filter 28,29 um einen Winkel von höchstens 1°, vorzugsweise um höchstens 0.5°. |

Fig. 6B zeigt eine 3D-Darstellung eines erfindungsgemässen Order-Sorting-Filters 7, der als rotierbarer Filterzylinder 32 ausgebildet ist. Der Filterzylinder 32 weist eine halbseitige Mantelfläche 33 auf, die ein Substrat 23 in Form einer Teil-Mantelfläche bildet. Das Substrat 23 weist eine innere erste Oberfläche als Innenwand und eine äussere zweite Oberfläche 27 als Aussenwand auf. Auf den Ober-flächen sind, ähnlich dem rechteckförmigen Order-Sorting-Filter 7 gemäss Fig. 3, wechselseitig teil-mantelförmige optische Dünnschichten angeordnet, nämlich eine erste optische Dünnschicht 24 auf der ersten Oberfläche und eine zweite optische Dünnschicht 25 auf der zweiten Oberfläche 27. Die optischen Dünnschichten 24 und 25 sind entlang den Oberflächen des Substrats 23 zueinander versetzt und teilweise bezüglich des Substrats 23 einander gegenüberliegend angeordnet. Ferner ist eine Teil-Mantelfläche des Substrats 23 unbedeckt.

Wie bei den vorangehenden Beispielen wird eine erste Zone des Order-Sorting-Filters 7 durch das unbedeckte Substrat 23 gebildet, eine zweite Zone durch die einseitige Abdeckung mittels der ersten optischen Dünnschicht 24, eine dritte Zone durch die einseitige Abdeckung mittels der zweite optischen Dünnschicht 25 und ein Übergangsbereich 34 durch die beidseitige Abdeckung mittels der beiden optischen Dünnschichten 24 und 25. Dabei bildet die erste Zone einen ersten Langpassfilter 28 und die zweite Zone einen zweiten Langpassfilter 29.

Ein beispielhafter erfindungsgemässer Order-Sorting-Filter 7 für den Filterzylinder 32 weist folgende Masse bzw. Eigenschaften auf:

| | |
|---|---|
| Substrat: | Dicke 1 mm; als Teil der Mantelfläche 33 mit Höhe 7 mm, Durchmesser 26 mm, Winkel 180°; |
| 1. Langpass-Filter 28: | Als Teil der Mantelfläche 33 mit Höhe 7 mm, Winkel 90°; |
| 2. Langpass-Filter 29: | Als Teil der Mantelfläche 33 mit Höhe 7 mm, Winkel 45°; |
| Räumliche Überlappung: | der beiden Langpass-Filter 28,29 um einen Winkel von höchstens 1°, vorzugsweise um höchstens 0.5°. |

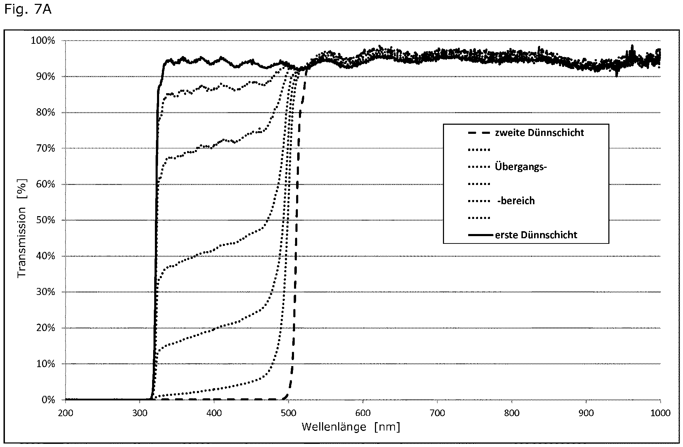

Fig. 7A zeigtein Diagramm, bei welchem die wellenlängenabhängigen Transmissions-Kennlinien bei verschiedenen Licht-Durchtritts-Positionen bei einem erfindungsgemässen Order-Sorting-Filter aufgenommen wurden. Die wellenlängenabhängigen Transmissions-Kennlinien des Order-Sorting-Filters bei verschiedenen Licht-Durchtritts-Positionen durch den Order-Sorting-Filter sind dargestellt: Je eine Position im Bereich der einlagigen ersten und zweiten optischen Dünnschicht (d.h. ohne Überlappung) und 5 Positionen im Überlappungsbereich dieser optischen Dünnschichten. Dabei sind die beiden optischen Dünnschichten wechselseitig auf dem Substrat angeordnet, also beispielsweise gem. Fig. 3, die erste optische Dünnschicht 24 auf der ersten Oberfläche 26 des Substrats 23 und die zweite optische Dünnschicht 25 auf der bezüglich dem Substrat 23 gegenüberliegenden zweiten Oberfläche 27 des Substrats 23.

Bei der Messung der wellenlängenabhängigen Transmissions-Kennlinien wurde der Order-Sorting-Filter in verschiedenen Positionen zwischen einer Lichtquelle (Blitzlampe) und einer der Lichtquelle gegenüberliegenden Eintrittsfläche eines Lichtleiters angeordnet. Die wellenlängenabhängige Transmissions-Kennlinie wurde jeweils mit einem am Austritt des Lichtleiters angeordneten Spektrometer (HR4000 von der Firma Ocean Optics, 830 Douglas Ave. Dunedin, FL 34698 USA) ermittelt. Der Order-Sorting-Filter wurde in verschiedene Positionen verschoben und die Aufnahme der Transmissions-Kennlinien wiederholt. So wurden im Übergangsbereich 34 die Transmissions-Kennlinien an fünf verschiedenen Positionen aufgenommen (gepunktete Linien) und jeweils eine bei den beiden an den Übergangsbereich 34 angrenzenden, einseitig bedeckten Bereiche des Order-Sorting-Filters, d.h. bei der ersten Dünnschicht (durchgezogene Linie) und bei der zweite Dünnschicht (gestrichelte Linie). In diesem Beispiel wurde ein Filter mit den auf ein Quarzsubstrat aufgedampften optischen Dünnschichten 24 und 25 (Item Number: LF102357) der Firma DELTA (Venlighedsvej 4, 2970 Hørsholm, Dänemark) verwendet.

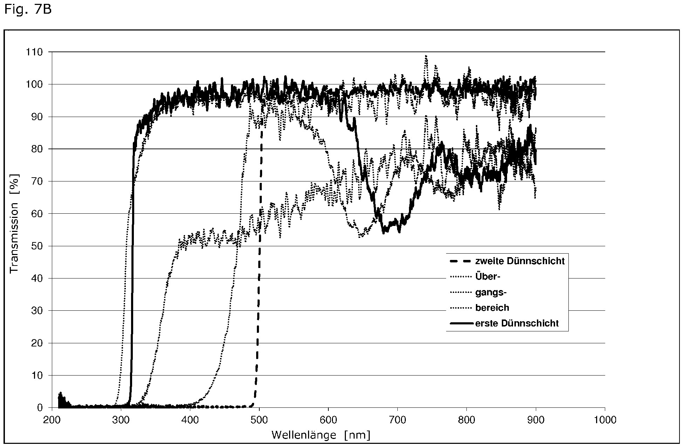

Fig. 7B zeigt ein Diagramm zu einem aus dem Stand der Technik bekannten Order-Sorting-Filter. Die wellenlängenabhängigen Transmissions-Kennlinien des Order-Sorting-Filters bei verschiedenen Licht-Durchtritts-Positionen durch den Order-Sorting-Filter sind dargestellt: Je eine Position im Bereich der einlagigen ersten und zweiten optischen Dünnschicht (d.h. ohne Überlappung) und 3 Positionen im Überlappungsbereich dieser optischen Dünnschichten. Weitere Angaben zur Messanordnung wurden im Zusammenhang mit Fig. 7A beschrieben.

Beim verwendeten, herkömmlichen Order-Sorting-Filter sind - im Gegensatz zur erfindungsgemässen Anordnung - die beiden optischen Dünnschichten gemeinsam und überlappend auf der einen Substrat-Seite angeordnet, beispielsweise gemäss Fig. 1B auf der obenliegenden Oberfläche des Substrats 910. Im Überlappungsbereich der beiden optischen Dünnschichten (in Fig. 1B im Überlappungsbereich 950AB oder 950BC) ergeben sich Interferenzeffekte, sodass die Transmission in diesem Übergangsbereich 34 sprunghaft ändert. Zudem führen die Interferenzeffekte zu einer reduzierten und stark schwankenden Transmission im Durchlassbereich für langwelliges Licht, also bei Wellenlängen von grösser als ca. 515 nm.

Im Übergangsbereich 34 oder Zwischenbereich der beiden optischen Dünnschichten zeigt sich für den erfindungsgemässen Order-Sorting-Filter in Fig. 7A ein kontinuierliches Ansteigen der Transmission beim Ändern der Messposition von der ersten zur zweiten optischen Dünnschicht. Ausserdem ist im Durchlassbereich für langwelliges Licht, d.h. bei Wellenlängen von grösser als ca. 515 nm, die Transmission völlig unbeeinflusst von den durchlaufenen Dünnschichten. Interferenzeffekte, wie bei Fig. 7B, sind also nicht oder nur in einem nicht feststellbaren Mass vorhanden. Durch dieses kontinuierliche und weitgehend lineare Verhalten des erfindungsgemässen Order-Sorting-Filters wird eine hohe Qualität der Messungen erreicht. Das Fehlen der Interferenzeffekte kann durch die Trennung der beiden optischen Dünnschichten durch das Substrat erklärt werden, da durch das Substrat die beiden optischen Dünnschichten so weit auseinander angeordnet sind, dass sie sich nicht mehr gegenseitig beeinflussen.

Es wird somit ein Spektrometer 1 vorgeschlagen,
das die Merkmale von Anspruch 1 umfasst.

Vorzugsweise umfassen der Order-Sorting-Filter 7 und das Beugungsgitter 4 des Monochromators 3 je einen Antrieb 4',7', die mit der Steuerung 6 des erfindungsgemässen Spektrometers 1 so wirkverbunden sind, dass der Order-Sorting-Filter 7 und das Beugungsgitter 4 des Monochromators 3 kontinuierlich und synchron zueinander beweglich sind.

Gegenüber bekannten Filterlösungen, beispielsweise konventionelle Filterscheiben, linear variable Filter oder spaltfrei zementierte Filterkombinationen wird mit dem erfindungsgemässen Order-Sorting-Filter eine kurze Messzeit, ein kostengünstiger Aufbau und eine hohe Robustheit (geringe Positions-Sensitivität) erreicht.
Der erfindungsgemässe Order-Sorting-Filter mit dem vorteilhaften kontinuierlichen Transmissions-Verhalten kann bei einer Vielzahl von Monochromatoren oder bei Geräten eingesetzt werden, welche auf Monochromatoren basieren.

**Bezugszeichen**

| | | | |
|---|---|---|---|
| 1 | Spektrometer | 23 | Substrat |
| 2 | Lichtquelle | 24 | erste optische Dünnschicht |
| 3 | Monochromator | 25 | zweite optische Dünnschicht |
| 4 | Beugungsgitter | 26 | erste Oberfläche von 23 |
| 4' | Beugungsgitter-Antrieb | 27 | zweite Oberfläche von 23 |
| 5 | Monochromator-Gehäuse | 28 | erster Langpass-Filter |
| 6 | Steuerung | 29 | zweiter Langpass-Filter |
| 7 | Order-Sorting-Filter | 30 | Filterschlitten |
| 7' | Order-Sorting-Filter - Antrieb | 31 | Filterscheibe |
| 8 | Eintrittsspalt | 32 | Filterzylinder |
| 9 | Austrittsspalt | 33 | Mantelfläche von 32 |
| 10 | Kondensor-Spiegel | 34 | Überlappungsbereich, Übergangsbereich |
| 11 | Kondensor-Linse | | |
| 12 | Mikroplatten-Aufnahme | | |
| 13 | Mikroplatte | | |
| 14 | Well | A | einfallender Lichtstrahl |
| 15 | Lichtleiter | B | reflektiertes Licht 0. Beugungsordnung (alle Wellenlängen) |
| 16 | Durchstrahlungsoptik | | |
| 17 | Durchstrahlungsachse | C | reflektiertes Licht 1. Beugungsordnung (erwünscht) |
| 18 | Umlenkspiegel | | |
| 19 | Mess-Detektor, Messanordnung | D | reflektiertes Licht 2. Beugungsordnung (unerwünscht) |
| 20 | Sammellinse | | |
| 21 | Referenzierungs-Detektor; Referenzanordnung | | |
| 22 | Strahlteiler | | |

## Patentansprüche

1. Spektrometer (1) umfassend:
(a) eine Lichtquelle (2);
(b) einen Monochromator (3) mit mindestens einem Beugungsgitter (4);
(c) ein Monochromator-Gehäuse (5);
(d) einen Order-Sorting-Filter (7), der dem Beugungsgitter (4) des Monochromators (3) vorgeschaltet oder nachgeschaltet ist;
(e) eine Mikroplatten-Aufnahme (12), die zum Aufnehmen zumindest einer Mikroplatte (13) ausgebildet ist, welche eine Anzahl Wells (14) umfasst, und
(f) eine Steuerung (6),
**dadurch gekennzeichnet, dass** der Order-Sorting-Filter (7) dieses Spektrometers (1) ein Substrat (23), eine erste optische Dünnschicht (24) und eine zweite optische Dünnschicht (25) umfasst, wobei die erste optische Dünnschicht (24) auf einer ersten Oberfläche (26) und die zweite optische Dünnschicht (25) auf einer zweiten, der ersten Oberfläche (26) gegenüberliegenden Oberfläche (27) des Substrats (23) räumlich teilweise überlappend angeordnet sind,
wobei die erste optische Dünnschicht (24) auf der ersten Oberfläche (26) des Substrats (23) als ein erster Langpass-Filter (28) mit einer Langpass-Kanten-Wellenlänge von 300 bis 400 nm ausgebildet ist, und wobei die zweite optische Dünnschicht (25) auf der zweiten Oberfläche (27) des Substrats (23) als ein zweiter Langpass-Filter (29) mit einer Langpass-Kanten-Wellenlänge von 400 bis 800 nm ausgebildet ist.

2. Spektrometer (1) nach Anspruch 1, **dadurch gekennzeichnet, dass** der Order-Sorting-Filter (7) und das Beugungsgitter (4) des Monochromators (3) je einen Antrieb (4',7') umfassen, die mit der Steuerung (6) so wirkverbunden sind, dass der Order-Sorting-Filter (7) und das Beugungsgitter (4) des Monochromators (3) kontinuierlich und synchron zueinander beweglich sind.

3. Spektrometer (1) nach Anspruch 1 oder 2, wobei das Monochromator-Gehäuse (5) einem Eintrittsspalt (8) und einem Austrittsspalt (9) umfasst und wobei das Spektrometer (1) **dadurch gekennzeichnet ist, dass** die Lichtquelle (2) in Wirkverbindung mit dem Eintrittsspalt (8) und der Order-Sorting-Filter (7) in Wirkverbindung mit dem Eintrittsspalt (8) oder mit dem Austrittsspalt (9) jeweils ausserhalb des Monochromator-Gehäuses (5) angeordnet sind.

4. Spektrometer (1) nach einem der Ansprüche 1 bis 3, **dadurch gekennzeichnet, dass** die Lichtquelle (2) als Blitzlampe ausgebildet ist und einen Kondensor-Spiegel (10) oder eine Kondensor-Linse (11) umfasst.

5. Spektrometer (1) nach einem der vorhergehenden Ansprüche, **dadurch gekennzeichnet, dass** es einen Lichtleiter (15) umfasst, der das durch das Beugungsgitter (4) des Monochromators (3) ausgewählte und durch den Order-Sorting-Filter (7) von unerwünschten Beugungsordnungen befreite Licht ausgewählter Wellenlängen einer Durchstrahlungsoptik (16) mit einer Durchstrahlungsachse (17) zuführt.

6. Spektrometer (1) nach Anspruch 5, **dadurch gekennzeichnet, dass** die Durchstrahlungsachse (17) im Wesentlichen vertikal angeordnet ist und sowohl die Mikroplatten-Aufnahme (12) als auch eine aufgenommene Mikroplatte (13) im Bereich eines Wells (14) durchstösst.

7. Spektrometer (1) nach Anspruch 5 oder 6, **dadurch gekennzeichnet, dass** die Durchstrahlungsoptik (16) einen elliptischen Umlenkspiegel (18) zum Umlenken des vom Monochromator (3) ankommenden Lichts in Richtung der Durchstrahlungsachse (17) umfasst.

8. Spektrometer (1) nach Anspruch 5 oder 6, **dadurch gekennzeichnet, dass** die Durchstrahlungsoptik (16) einen Mess-Detektor (19) zum Detektieren und eine dem Mess-Detektor (19) vorgeschaltete Sammellinse (20) zum Fokussieren des von einem Well (14) der Mikroplatte (13) ankommenden Durchstrahlungslichts umfasst.

9. Spektrometer (1) nach Anspruch 5 oder 6, **dadurch gekennzeichnet, dass** die Durchstrahlungsoptik (16) einen Referenzierungs-Detektor (21) zum Detektieren und einen dem Referenzierungs-Detektor (21) vorgeschalteten Strahlteiler (22) zum Ablenken eines Anteils des vom Monochromator (3) ankommenden Lichts umfasst.

10. Spektrometer (1) nach Anspruch 8 und 9, **dadurch gekennzeichnet, dass** die Messanordnung (19) der Durchstrahlungsoptik (16) auf der Durchstrahlungsachse (17) oberhalb der Mikroplatten-Aufnahme (12) und der aufgenommenen Mikroplatte (13) angeordnet ist, **und dass** die Referenzanordnung (21) auf der Durchstrahlungsachse (17) unterhalb der Mikroplatten-Aufnahme (12) und der aufgenommenen Mikroplatte (13) angeordnet ist.

11. Spektrometer (1) nach einem der Ansprüche 1 bis 10, **dadurch gekennzeichnet, dass** das Substrat (23) eine Glasplatte mit einer Langpass-Kanten-Wellenlänge von 160 bis 190 nm ist.

12. Spektrometer (1) nach Anspruch 11, **dadurch gekennzeichnet, dass** die erste optischen Dünnschicht (24) eine Langpass-Kanten-Wellenlänge definiert, die um einen Faktor 1.9 grösser ist als die Langpass-Kanten-Wellenlänge des Substrats (23) **und dass** die zweite optische Dünnschicht (25) eine Langpass-Kanten-Wellenlänge definiert, die um einen Faktor 1.9 grösser ist als die Langpass-Kanten-Wellenlänge der ersten optischen Dünnschicht (24).

13. Spektrometer (1) nach einem der Ansprüche 1 bis 10, **dadurch gekennzeichnet, dass** die erste optische Dünnschicht (24) auf der ersten Oberfläche (26) des Substrats (23) als ein erster Langpass-Filter (28) mit einer Langpass-Kanten-Wellenlänge von 312 nm ausgebildet ist, **und dass** die zweite optische Dünnschicht (25) auf der zweiten Oberfläche (27) des Substrats (23) als ein zweiter Langpass-Filter (29) mit einer Langpass-Kanten-Wellenlänge von 515 nm ausgebildet ist.

14. Spektrometer (1) nach einem der Ansprüche 1 bis 13, **dadurch gekennzeichnet, dass** der Order-Sorting-Filter (7) als linear oder quasi-linear beweglicher Filterschlitten (30) ausgebildet ist, wobei das als Glasplatte ausgebildete Substrat (23) des Order-Sorting-Filters (7) im Wesentlichen rechteckig ausgebildet ist, und wobei die beiden Langpassfilter (28,29) ebenfalls eine im Wesentlichen rechteckige Form aufweisen.

15. Spektrometer (1) nach einem der Ansprüche 1 bis 13, **dadurch gekennzeichnet, dass** der Order-Sorting-Filter (7) als rotierbare Filterscheibe (31) ausgebildet ist, wobei das als Glasplatte ausgebildete Substrat (23) des Order-Sorting-Filters (7) kreisrund ausgebildet ist, und wobei die beiden Langpassfilter (28,29) eine sektorförmige Form aufweisen.

16. Spektrometer (1) nach einem der Ansprüche 1 bis 13, **dadurch gekennzeichnet, dass** der Order-Sorting-Filter (7) als rotierbarer Filterzylinder (32) mit einer Mantelfläche (33) ausgebildet ist, wobei das als Glasplatte ausgebildete Substrat (23) des Order-Sorting-Filters (7) als eine Hälfte der Mantelfläche (33) ausgebildet ist, und wobei die beiden Langpassfilter (28,29) wechselseitig je einen Teil der Glasplatte abdecken.

17. Raster-Verfahren zum Erfassen des Absorptions-Spektrums von in Wells (14) von Mikroplatten (13) untersuchten Proben, **dadurch gekennzeichnet, dass** ein Spektrometer (1) gemäss einem der Ansprüche 1 bis 16 verwendet wird.

18. Raster-Verfahren nach Anspruch 17, **dadurch gekennzeichnet, dass** der Order-Sorting-Filter (7) Überlappungsbereiche (34) der Langpass-Filter (28,29) aufweist und kontinuierlich und synchron mit dem Beugungsgitter (4) des Monochromators (3) so bewegt wird, dass jeder Langpass-Kanten-Wellenlänge eines Überlappungsbereichs (34) auf dem Order-Sorting-Filter (7) eine Wellenlänge des Beugungsgitters (4) des Monochromators (3) zugeordnet wird, wobei die Steuerung (6) des Spektrometers (1) diese Bewegungen mit einer Elektronik des Mess-Detektors (19) synchronisiert.

19. Raster-Verfahren nach Anspruch 17, **dadurch gekennzeichnet, dass** einer ersten Langpass-Kanten-Wellenlänge des Order-Sorting-Filters (7) von 312 nm eine Wellenlänge des Beugungsgitters (4) des Monochromators (3) von 350 nm zugeordnet wird.

20. Raster-Verfahren nach Anspruch 19, **dadurch gekennzeichnet, dass** einer zweiten Langpass-Kanten-Wellenlänge des Order-Sorting-Filters (7) von 515 nm eine Wellenlänge des Beugungsgitters (4) des Monochromators (3) von 550 nm zugeordnet wird.

21. Raster-Verfahren nach Anspruch 17, **dadurch gekennzeichnet, dass** beim Erfassen des Absorptions-Spektrums von in Wells (14) von Mikroplatten (13) untersuchten Proben, synchron mit dem Erfassen des Absorptions-Signals mit dem Mess-Detektor (19) ein Referenz-Signal mit dem Referenzierungs-Detektor (21) erfasst wird, wobei die jeweiligen Absorptions-Signale anhand der entsprechenden, synchron erfassten Referenz-Signale normiert werden.

## Claims

1. A spectrometer (1), comprising
(a) a light source (2);
(b) a monochromator (3) with at least one diffraction grating (4);
(c) a monochromator housing (5);
(d) an order sorting filter (7), which is provided upstream or downstream of the diffraction grating (4) of the monochromator (3);
(e) a microplate receptacle (12), which is formed for accommodating at least one microplate (13), which comprises a number of wells (14), and
(f) a controller (6),
**characterized in that** the order sorting filter (7) of said spectrometer (1) comprises a substrate (23), a first optical thin film (24) and a second optical thin film (25), wherein, in a spatially partly overlapping manner, the first optical thin film (24) is arranged on a first surface (26) and the second optical thin film (25) is arranged on a second surface (27), opposing the first surface (26), of the substrate (23),
wherein the first optical thin film (24) on the first surface (26) of the substrate (23) is formed as a first long-pass filter (28) having a long-pass edge wavelength of 300 to 400 nm, and wherein the second optical thin film (25) on the second surface (27) of the substrate (23) is formed as a second long-pass filter (29) having a long-pass edge wavelength of 400 to 800 nm.

2. The spectrometer (1) according to claim 1, **characterized in that** the order sorting filter (7) and the diffraction grating (4) of the monochromator (3) each comprise a drive (4', 7'), which is operatively connected to the controller (6) in such a way that the order sorting filter (7) and the diffraction grating (4) of the monochromator (3) are continuously and synchronously movable with respect to each other.

3. The spectrometer (1) according to claim 1 or 2, wherein the monochromator housing (5) comprises an inlet gap (8) and an outlet gap (9), and wherein the spectrometer (1) is **characterized in that** the light source (2) being in operative connection with the inlet gap (8) and the order sorting filter (7) being in operative connection with the inlet gap (8) or with the outlet gap (9) are arranged outside the monochromator housing (5), respectively.

4. The spectrometer (1) according to one of claims 1 to 3, **characterized in that** the light source (2) functions as a flash lamp and comprises a condenser mirror (10) or a condenser lens (11).

5. The spectrometer (1) according to one of the preceding claims, **characterized in that** it comprises a fibre-optic conductor (15) which supplies the light of selected wavelengths, selected by means of the diffraction grating (4) of the monochromator (3) and relieved from undesirable orders of diffraction by means of the order sorting filter (7), to transmission optics (16) having a transmission axis (17).

6. The spectrometer (1) according to claim 5, **characterized in that** the transmission axis (17) is arranged substantially vertically and penetrates both the microplate receptacle (12) as well as an accommodated microplate (13) in the region of a well (14).

7. The spectrometer (1) according to claim 5 or 6, **characterized in that** the transmission optics (16) comprises an elliptical deflection mirror (18) for deflecting the light coming from the monochromator (3) in the direction of the transmission axis (17).

8. The spectrometer (1) according to claim 5 or 6, **characterized in that** the transmission optics (16) comprises a measuring detector (19) for detection and a collecting lens (20) provided upstream of the measuring detector (19) for focusing the transmission light arriving from a well (14) of the microplate (13).

9. The spectrometer (1) according to claim 5 or 6, **characterized in that** the transmission optics (16) comprises a referencing detector (21) for detection and a beam splitter (22) provided upstream of the referencing detector (21) for deflecting a fraction of the light arriving from the monochromator (3).

10. The spectrometer (1) according to claim 8 and 9, **characterized in that** the measuring assembly (19) of the transmission optics (16) is arranged on the transmission axis (17) above the microplate receptacle (12) and the accommodated microplate (13), **and that** the reference arrangement (21) is arranged on the transmission axis (17) beneath the microplate receptacle (12) and the accommodated microplate (13).

11. The spectrometer (1) according to one of the claims 1 to 10, **characterized in that** the substrate (23) is a glass plate having a long-pass edge wavelength of 160 to 190 nm.

12. The spectrometer (1) according to claim 11, **characterized in that** the first optical thin film (24) defines a long-pass edge wavelength which exceeds the long-pass edge wavelength of the substrate (23) by a factor of 1.9, **and that** the second optical thin film (25) defines a long-pass edge wavelength which exceeds the long-pass edge wavelength of the first optical thin film (24) by a factor of 1.9.

13. The spectrometer (1) according to one of claims 1 to 10, **characterized in that** the first optical thin film (24) on the first surface (26) of the substrate (23) is formed as a first long-pass filter (28) having a long-pass edge wavelength of 312 nm, **and that** the second optical thin film (25) on the second surface (27) of the substrate (23) is formed as a second long-pass filter (29) having a long-pass edge wavelength of 515 nm.

14. The spectrometer (1) according to one of claims 1 to 13, **characterized in that** the order sorting filter (7) is formed as a linear or quasi-linear movable filter carriage (30), wherein the substrate (23) of the order sorting filter (7), which is formed as a glass plate, is formed in a substantially rectangular manner, and wherein the two long-pass filters (28, 29) also have a substantially rectangular shape.

15. The spectrometer (1) according to one of claims 1 to 13, **characterized in that** the order sorting filter (7) is formed as a rotatable filter disc (31), wherein the substrate (23) of the order sorting filter (7), which is formed as a glass plate, is formed circularly, and wherein the two long-pass filters (28, 29) have a sector-shaped form.

16. The spectrometer (1) according to one of claims 1 to 13, **characterized in that** the order sorting filter (7) is formed as a rotatable filter cylinder (32) having a jacket surface (33), wherein the substrate (23) of the order sorting filter (7), which is formed as a glass plate, is formed as a half of the jacket surface (33), and wherein the two long-pass filters (28, 29) mutually cover a respective portion of the glass plate.

17. A scanning method for detecting the absorption spectrum of samples examined in wells (14) of microplates (13), **characterized by** usage of a spectrometer (1) according to one of claims 1 to 16.

18. The scanning method according to claim 17, **characterized in that** the order sorting filter (7) comprises overlapping regions (34) of the long-pass filter (28, 29) and is moved continuously and synchronously with the diffraction grating (4) of the monochromator (3) in such a way that each long-pass edge wavelength of an overlapping region (34) on the order sorting filter (7) is assigned a wavelength of the diffraction grating (4) of the monochromator (3), wherein the controller (6) of the spectrometer (1) synchronises these movements with electronics of the measuring detector (19).

19. The scanning method according to claim 17, **characterized in that** a wavelength of the diffraction grating (4) of the monochromator (3) of 350 nm is assigned to a first long-pass edge wavelength of the order sorting filter (7) of 312 nm.

20. The scanning method according to claim 19, **characterized in that** a wavelength of the diffraction grating (4) of the monochromator (3) of 550 nm is assigned to a second long-pass edge wavelength of the order sorting filter (7) of 515 nm.

21. The scanning method according to claim 17, **characterized in that** during the detection of the absorption spectrum of samples examined in wells (14) of microplates (13) a reference signal is detected with the referencing detector (21), synchronised with the detection of the absorption signal by means of the measuring detector (19), wherein the respective absorptions signals are normalised according to the respective, synchronously detected reference signals.

## Revendications

1. Spectromètre (1) comprenant :
(a) une source lumineuse (2) ;
(b) un monochromateur (3) avec au moins un réseau de diffraction (4) ;
(c) un boîtier monochromateur (5) ;
(d) un filtre de tri séquentiel (7) monté en amont ou en aval du réseau de diffraction (4) du monochromateur (3) ;
(e) un logement de microplaques (12) conçu pour recevoir au moins une microplaque (13) comprenant un certain nombre de puits (14), et
(f) une commande (6),
**caractérisé en ce que** le filtre de tri séquentiel (7) de ce spectromètre (1) comprend un substrat (23), une première couche mince optique (24) et une deuxième couche mince optique (25), la première couche mince optique (24) étant agencée sur une première surface (26) et la deuxième couche mince optique (25) sur une deuxième surface (27) du substrat (23), opposée à la première surface (26), en se chevauchant partiellement, la première couche mince optique (24) sur la première surface (26) du substrat (23) étant réalisée comme un premier filtre passe-ondes longues (28) avec une longueur d'onde de bord passe-ondes longues comprise entre 300 et 400 nm, et la deuxième couche mince optique (25) sur la deuxième surface (27) du substrat (23) étant réalisée comme un deuxième filtre passe-ondes longues (29) avec une longueur d'onde de bord passe-ondes longues comprise entre 400 et 800 nm.

2. Spectromètre (1) selon la revendication 1, **caractérisé en ce que** le filtre de tri séquentiel (7) et le réseau de diffraction (4) du monochromateur (3) comprennent chacun un entraînement (4', 7') qui sont en liaison active avec la commande (6), de sorte que le filtre de tri séquentiel (7) et le réseau de diffraction (4) du monochromateur (3) sont mobiles en continu et de façon synchrone l'un par rapport à l'autre.

3. Spectromètre (1) selon la revendication 1 ou 2, dans lequel le boîtier monochromateur (5) comprend une fente d'entrée (8) et une fente de sortie (9), et dans lequel le spectromètre (1) est **caractérisé en ce que** la source lumineuse (2) est agencée en liaison active avec la fente d'entrée (8) et le filtre de tri séquentiel (7) en liaison active avec la fente d'entrée (8) ou avec la fente de sortie (9), à l'extérieur du boîtier monochromateur (5).

4. Spectromètre (1) selon l'une des revendications 1 à 3, **caractérisé en ce que** la source lumineuse (2) est réalisée sous la forme d'un flash et comprend un miroir de condenseur (10) ou une lentille de condenseur (11).

5. Spectromètre (1) selon l'une des revendications précédentes, **caractérisé en ce qu'**il comprend un guide de lumière (15) qui guide la lumière sélectionnée par le réseau de diffraction (4) du monochromateur (3) et libérée par le filtre de tri séquentiel (7) de l'ordre de diffraction non souhaité de longueurs d'ondes sélectionnées d'une optique de rayonnement (16) avec un axe de rayonnement (17).

6. Spectromètre (1) selon la revendication 5, **caractérisé en ce que** l'axe de rayonnement (17) est agencé essentiellement vertical et traverse à la fois le logement de microplaques (12) et une microplaque reçue (13) dans la zone d'un puits (14).

7. Spectromètre (1) selon la revendication 5 ou 6, **caractérisé en ce que** l'optique de rayonnement (16) comprend un miroir de renvoi elliptique (18) pour renvoyer la lumière provenant du monochromateur (3) dans la direction de l'axe de rayonnement (17).

8. Spectromètre (1) selon la revendication 5 ou 6, **caractérisé en ce que** l'optique de rayonnement (16) comprend un détecteur de mesure (19) pour détecter et une lentille convergente (20) installée en amont du détecteur de mesure (19) pour focaliser la lumière de rayonnement provenant d'un puits (14) de la microplaque (13).

9. Spectromètre (1) selon la revendication 5 ou 6, **caractérisé en ce que** l'optique de rayonnement (16) comprend un détecteur de référence (21) pour détecter et un séparateur de faisceau (22) installé en amont du détecteur de référence (21) pour dévier une partie de la lumière provenant du monochromateur (3).

10. Spectromètre (1) selon la revendication 8 ou 9, **caractérisé en ce que** le dispositif de mesure (19) de l'optique de rayonnement (16) est agencé sur l'axe de rayonnement (17) au-dessus du logement de microplaques (12) et de la microplaque reçue (13), et **en ce que** le dispositif de référence (21) est agencé sur l'axe de rayonnement (17) sous le logement de microplaques (12) et sous la microplaque reçue (13).

11. Spectromètre (1) selon l'une des revendications 1 à 10, **caractérisé en ce que** le substrat (23) est une plaque de verre avec une longueur d'onde de bord passe-ondes longues comprise entre 160 et 190 nm.

12. Spectromètre (1) selon la revendication 11, **caractérisé en ce que** la première couche mince optique (24) définit une longueur d'onde de bord passe-ondes longues qui est plus élevée d'un facteur de 1,9 que la longueur d'onde de bord passe-ondes longues du substrat (23), et **en ce que** la deuxième couche mince optique (25) définit une longueur d'onde de bord passe-ondes longues qui est plus élevée d'un facteur de 1,9 que la longueur d'onde de bord passe-ondes longues de la première couche mince optique (24).

13. Spectromètre (1) selon l'une des revendications 1 à 10, **caractérisé en ce que** la première couche mince optique (24) sur la première surface (26) du substrat (23) est réalisée sous la forme d'un premier filtre passe-ondes longues (28) avec une longueur d'onde de bord passe-ondes longues de 312 nm, et **en ce que** la deuxième couche mince optique (25) sur la deuxième surface (27) du substrat (23) est réalisée sous la forme d'un deuxième filtre passe-ondes longues (29) avec une longueur d'onde de bord passe-ondes longues de 515 nm.

14. Spectromètre (1) selon l'une des revendications 1 à 13, **caractérisé en ce que** le filtre de tri séquentiel (7) est réalisé comme un chariot de filtre (30) mobile de façon linéaire ou quasi-linéaire, le substrat (23) réalisé sous la forme d'une plaque de verre du filtre de tri séquentiel (7) étant réalisé essentiellement rectangulaire, et les deux filtres passe-ondes longues (28, 29) présentant également une forme essentiellement rectangulaire.

15. Spectromètre (1) selon l'une des revendications 1 à 13, **caractérisé en ce que** le filtre de tri séquentiel (7) est réalisé sous la forme d'un disque filtrant rotatif (31), le substrat (23) réalisé sous la forme d'une plaque de verre du filtre de tri séquentiel (7) étant réalisé circulaire, et les deux filtres passe-ondes longues (28, 29) présentant une forme sectorielle.

16. Spectromètre (1) selon l'une des revendications 1 à 13, **caractérisé en ce que** le filtre de tri séquentiel (7) est réalisé sous la forme d'un cylindre filtrant rotatif (32) avec une surface d'enveloppe (33), le substrat (23) réalisé sous la forme d'une plaque de verre du filtre de tri séquentiel (7) étant réalisé comme une moitié de la surface d'enveloppe (33), et les deux filtres passe-ondes longues (28, 29) recouvrant chacun mutuellement une partie de la plaque de verre.

17. Procédé de balayage pour détecter le spectre d'absorption d'échantillons examinés dans les puits (14) de microplaques (13), **caractérisé en ce qu'**on utilise un spectromètre (1) selon l'une des revendications 1 à 16.

18. Procédé de balayage selon la revendication 17, **caractérisé en ce que** le filtre de tri séquentiel (7) présente des zones de chevauchement (34) des filtres passe-ondes longues (28, 29) et est déplacé en continu et de façon synchrone avec le réseau de diffraction (4) du monochromateur (3), de sorte qu'il est associé à chaque longueur d'onde de bord passe-ondes longues d'une zone de chevauchement (34) sur le filtre de tri séquentiel (7) une longueur d'onde du réseau de diffraction (4) du monochromateur (3), la commande (6) du spectromètre (1) synchronisant ces mouvements avec une électronique du détecteur de mesure (19).

19. Procédé de balayage selon la revendication 17, **caractérisé en ce qu'**il est associé à une première longueur d'onde de bord passe-ondes longues du filtre de tri séquentiel (7) de 312 nm une longueur d'onde du réseau de diffraction (4) du monochromateur (3) de 350 nm.

20. Procédé de balayage selon la revendication 19, **caractérisé en ce qu'**il est associé à une deuxième longueur d'onde de bord passe-ondes longues du filtre de tri séquentiel (7) de 515 nm une longueur d'onde du réseau de diffraction (4) du monochromateur (3) de 550 nm.

21. Procédé de balayage selon la revendication 17, **caractérisé en ce que**, lors de la détection du spectre d'absorption des échantillons examinés dans les puits (14) des microplaques (13), il est déterminé de façon synchrone avec la détection du signal d'absorption avec le détecteur de mesure (19) un signal de référence avec le détecteur de référence (21), les signaux d'absorption respectifs étant normalisés à l'aide des signaux de référence correspondants déterminés de façon synchrone.
